# EUROPEAN PATENT APPLICATION

(11) **EP 2 639 663 A2**
(43) Date of publication of application: **18.09.2013**
(21) Application number: 13158133.2
(22) Date of filing: 07.03.2013
(51) Int. Cl.: G05B 19/418

(54) **System, method and apparatus for dynamically managing control devices**

(30) Priority: 12.03.2012 FI 20125259
(71) Applicant: There Corporation OY, 65100 Vaasa (FI)
(72) Inventor: Finni, Olli, 00820 Helsinki (FI); Haverinen, Markus, 00500 Helsinki (FI); Marjola, Kalle, 02600 Espoo (FI)
(74) Representative: Lamberg, Samu Petteri

(57) **Abstract**

A method, system and apparatus for dynamically managing control devices in a control system. The method includes attaching a first control device to a service object of an apparatus using a first device object and storing first control device data to the service object. The method further includes revoking the first control device from the service object and attaching a second control device to the service object of the apparatus using a second device object. The method further includes storing second control device data to the service object and processing the first control device data and the second control device data, by the service object, for providing control device functionality for a user.

## Description

### TECHNICAL FIELD

The present application generally relates to a system, method and apparatus for dynamically managing control devices.

### BACKGROUND ART

A control system typically comprises a node or functionality that controls. i.e., manages and uses a set of control devices, for example in a building or in other geographically limited area.

New control devices may be included to the control system by creating an association between the control device and the control system. In Z-Wave technology, the association is created by first setting the control system into an inclusion-mode and while in the inclusion-mode, by pushing a signal button at the target device. In Bluetooth™ the association is created by first searching potential devices and then pairing the selected target device by giving the four-digit secret pairing code, for example.

When the control device is not needed anymore, the device can be excluded from the control system. In exclusion, the association between the control system and the control device is deleted. In Z-Wave technology, the association is deleted by first setting the control system into exclusion-mode and while in the exclusion-mode, by pushing a signal button of the control device. It is also possible to force the exclusion of the control device if necessary. Typically forced exclusion needs to be done when the control device breaks down and becomes permanently unavailable.

The control system may implement certain attributes and methods on behalf of the control device. Examples of additional attributes and methods may comprise various kinds of calculations or statistics based on the data provided by the control device, such as event logs, authentication and access control mechanisms, convenience attributes like nicknames, location data etc.

The control system may collect and store remarkable amount of service-related data over the time. Considering the situation, where the control device becomes excluded from the control system for any reason, the service-related data is deleted. Existing home automation products, from a life cycle point of view, make no distinction between devices and services. The services live and die along with the corresponding devices. There is typically no way to migrate service-related data from one control device to another without losing some valuable data.

A solution is needed for dynamically managing the control devices and migrating the collected service-related data for further use in the control system.

### SUMMARY

According to a first example aspect of the invention there is provided a method for dynamically managing control devices in a control system, the method comprising:
attaching a first control device to a service object of an apparatus using a first device object;
storing first control device data to the service object;
revoking the first control device from the service object;
attaching a second control device to the service object of the apparatus using a second device object;
storing second control device data to the service object;
processing the first control device data and the second control device data, by the service object, for providing control device functionality for a user.

The first device object may comprise a first device function assigned to the service object. The second device object may comprise a second device function assigned to the service object.

In an embodiment, the method further comprises connecting at least one of the first and the second control device to the apparatus over a data connection. Furthermore, the method may comprise maintaining, by the apparatus, mapping information of attachment between the control device and the service object. The mapping information may comprise assignment information of the device function and the service object.

In an embodiment, the method further comprises receiving a request, by the apparatus, to attach the second control device; informing the service object, by the apparatus, of the request; and updating the mapping information of the attachment by the service object. The method may further comprise receiving a request, by the apparatus, to revoke the first control device; informing the service object, by the apparatus, of the request; and updating the mapping information of the revocation by the service object. Control information may be received from a remote user terminal using a communication interface.

According to a second example aspect of the invention there is provided an apparatus for dynamically managing control devices in a control system, the apparatus comprising:
a communication interface for transceiving, over a data connection, control device data between the apparatus and the control devices;
at least one processor; and
at least one memory including computer program code;
   the at least one memory and the computer program code configured to, with the at least one processor, cause the apparatus to:
   attach a first control device to a service object of the apparatus using a first device object;
   store first control device data to the service object;
   revoke the first control device from the service object;
   attach a second control device to the service object of the apparatus using a second device object;
   store second control device data to the service object; and
   process the first control device data and the second control device data, by the service object, for providing control device functionality for a user.

The device object may comprise at least one device function and provide control device data for as many service objects, respectively. The apparatus may further receive control information from a remote user terminal using the communication interface.

In an embodiment, the data connection comprises at least one of the following:
- Z-Wave;
- Zigbee;
- Bluetooth™;
- Local Area Network;
- Wireless Local Area Network; and
- Infrared.

The control device may further comprise at least one of the following:
- a sensor;
- an energy meter;
- a temperature meter;
- a humidity meter;
- a switch;
- a motion detector;
- a door opening/closing detector;
- a window opening/closing detector; and
- an input/output device.

According to a third example aspect of the invention there is provided a computer program embodied on a computer readable medium comprising computer executable program code which, when executed by at least one processor of an apparatus, causes the apparatus to:
attach a first control device to a service object of the apparatus using a first device object;
store first control device data to the service object;
revoke the first control device from the service object;
attach a second control device to the service object of the apparatus using a second device object;
store second control device data to the service object; and
process the first control device data and the second control device data, by the service object, for providing control device functionality for a user.

According to a fourth example aspect of the invention there is provided a system comprising:
an apparatus to maintain a service object for providing a control device functionality for a user; to maintain a device object for attaching a control device to the service object; to store control device data to the service object; to process the control device data, by the service object, to provide control device functionality for a user;
a first control device attached to the service object using a first device object; and
a second control device attached to the service object using a second device object.

In an embodiment, the system further comprises a user terminal remotely connecting with the apparatus to transmit control information and to receive control device information.

Different non-binding example aspects and embodiments of the present invention have been illustrated in the foregoing. The above embodiments are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

The invention will be described, by way of example only, with reference to the accompanying drawings, in which:
- Fig. 1: shows a schematic picture of a system according to an example embodiment of the invention;
- Fig. 2a: presents an example block diagram of a control system in which various embodiments of the invention may be applied;
- Fig. 2b: presents an example block diagram of a control system in which various embodiments of the invention may be applied;
- Fig. 3: presents an example block diagram of an apparatus in which various embodiments of the invention may be applied;
- Fig. 4: presents an example block diagram of a control device in which various embodiments of the invention may be applied; and
- Fig. 5: shows a flow diagram showing operations in accordance with an example embodiment of the invention.

### DETAILED DESCRIPTION

In the following description, like numbers denote like elements.

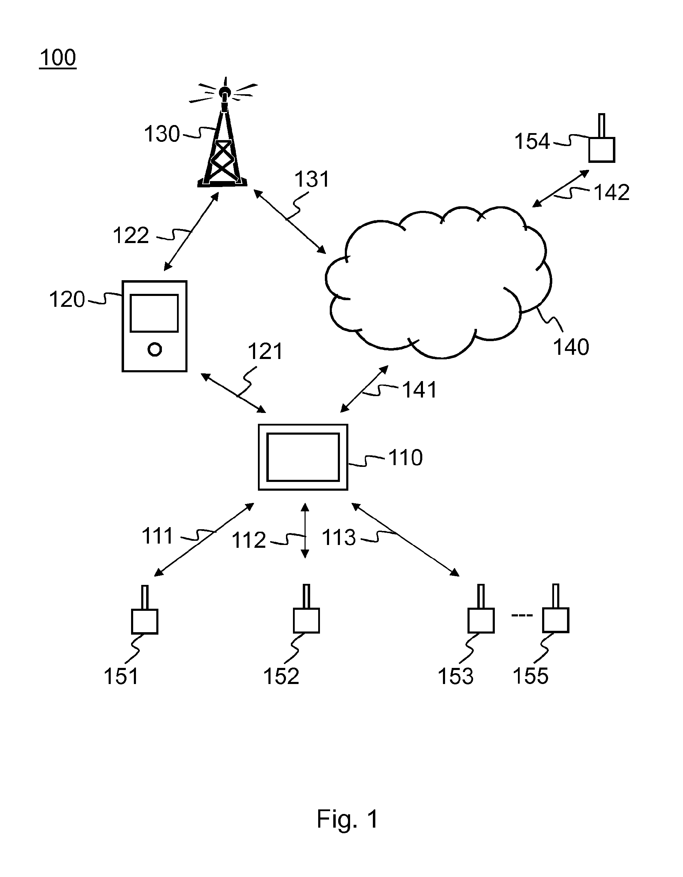

Fig. 1 shows a schematic picture of a system 100 according to an example embodiment of the invention. The system 100 comprises an apparatus 110 configured to be capable of managing control devices 151-153, such as sensors, meters or switches. The apparatus 110 is configured to be connectable to the control devices over a data connection 111-113. The data connection 111-113 may be a wired connection or a wireless connection. The wired connection may comprise Universal Serial Bus (USB), High-Definition Multimedia Interface (HDMI), M-bus, or local area network (LAN) such as Ethernet, for example. The wireless connection may comprise Bluetooth™, Radio Frequency Identification (RF-ID), Z-Wave, ZigBee, Infrared or wireless local area network (WLAN), for example.

The apparatus 110 is configured to send requests for control device data, controlling data or assignment/revocation information to the control devices 151-153. The control devices 151-153 are configured to send control device data, requests or assignment/revocation information to the apparatus 110. A user of the apparatus 110 may utilize a user interface of the apparatus 110 for communicating with the system 100, for example. The control devices 151-153 may also be configured to send control device data over the data connection 111-113 automatically to the apparatus 110. Such settings may comprise for example time of the day, amount of newly captured control device data or existence of the data connection 111-113 for the apparatus 110. The data communication between the apparatus 110 and the control devices 151-153 may also be triggered by a user of the apparatus 110 or a control process of the apparatus 110, for example.

In an embodiment, the system 100 comprises a remote control device 154 configured to be connectable to the apparatus 110 over a data connection 140-142. The data connection 140-142 may comprise any wired or wireless connection described for the connections 111-113 between the apparatus 110 and the control devices 151-153. The apparatus 110 and the remote control device 154 may be connected to a public data communication network 140, for example the Internet, over data connections 141 and 142, respectively.

The user terminal 120 may comprise a mobile phone, an internet tablet or a laptop computer, for example. The user terminal 120 is capable of downloading and locally executing software program code. The software program code may be a client application of a service application running on the apparatus 110 of the system 100. The user terminal 120 is configured to be connectable to a wireless communication network 130 over a wireless connection 122. The wireless connection 122 may comprise a mobile cellular network or a wireless local area network (WLAN), for example. The wireless communication network 130 may be connected to a public data communication network 140, for example the Internet, over a data connection 131.

In an embodiment, the user terminal 120 is configured to be connectable to the apparatus 110 over a data connection 121. The data connection 121 may comprise any wired or wireless connection described for the connection 111-113 between the apparatus 110 and the control devices 151-153.

In an embodiment, the system 100 may utilize for any data connection 111-113, 121-122, 131, 140-142 wireless or wired technologies, in which control devices are not statically configured to the control system 100 but the control devices can also be included to and excluded from the control system 100 through similar kind of dynamic procedure like in wireless technologies discussed earlier in this application. Such systems are often internet protocol (IP) based and typically based on some special control protocol on top of the internet protocol (IP).

The control devices that can be dynamically managed may comprise for example a sensor, an energy meter, a temperature meter, a humidity meter, a switch, a motion detector, a door opening/closing detector, a window opening/closing detector, and an input/output device.

In an embodiment, the control device 151-154 provides a set of services that the user can access through the control system 100 using the user interface of the apparatus 110 or the user terminal 120, for example. As an example, a switch device 151-154 may be considered to provide a switch service, which consists of the switch states 'on' and 'off' and corresponding functions defined for both states. One control device 151-154 may also provide multiple services. For example, an energy-meter device 151-154 may provide a switch-service and an energy-meter service. The service concept may also enable the control system 100 to provide additional attributes and methods for the control device 151-154. The additional attributes and methods may comprise various kinds of calculations or statistics based on the control device data the control device 151-154 is able to provide. Such attributes and methods may comprise event logs, authentication and access control mechanisms, convenience attributes like nicknames and location data, for example. Characteristically, the additional attributes and methods may be implemented in the control system 100 with no or minimum involvement of the control device 151-154.

The control system 100 may collect and store remarkable amount of service-related data over the time for the control device 153, for example. The control device 153 may become excluded from the control system 100 for any reason, for example due malfunction. The broken control device 153 may be replaced by a corresponding control device 155. However, the data collected earlier for the control device 153 may be valuable to the user and thus it is undesirable to lose the data. Another possible scenario may be that the user would like to migrate his appliances from one control device to another. In both of these scenarios it is beneficial to migrate at least some data related to the old control device 153 to the new device 155, no matter if the old device 153 is still available or not.

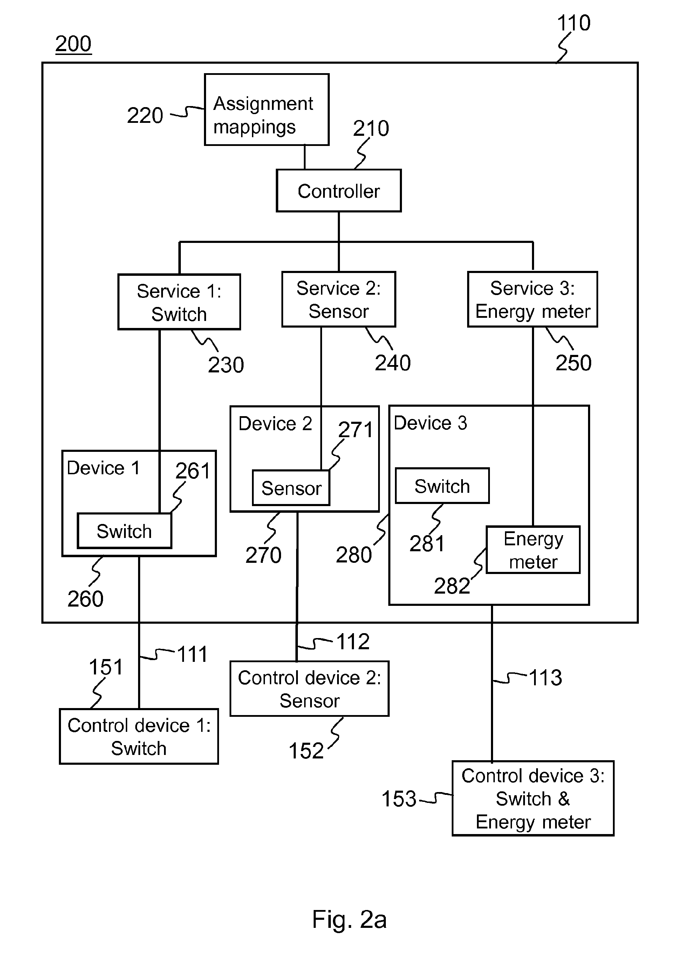

Fig. 2a presents an example block diagram of a control system 200 in which various embodiments of the invention may be applied. A control apparatus 110 may comprise for example a laptop computer, a desktop computer, a tablet or a server computer apparatus. The control system 200 enables decoupling life cycles of control devices 151-153 and services from each other. The services may be implemented in the control apparatus 110 as service objects 230-250 that can be created and deleted independently of the control devices 151-153. Thus the control devices 151-153 and services may have life cycles of their own. If the control device 151-153 is attached to the apparatus 110, the control device 151-153 may be assigned to the service object 230-250 providing service functionality for the user. In an embodiment, a device function may be assigned to the service object 230-250 and the control device 151-153 may be assigned implicitly via the device function.

The control device 151-153 may also be revoked from the service objects 230-250 at any time. When the control device 151-153 is excluded from the apparatus 110, the control device 151-153 is also revoked from the service objects(s) 230-250 being assigned to before the exclusion. Eventually, another control device 151-153 may be assigned to the service object 230-250. Naturally the same control device 151-153 may be re-assigned to the service object 230-250. In both cases, at least some of the valuable control device data may be associated with the service and not all control device data is lost when control device configuration is changed for any reason.

In an embodiment, the apparatus 110 comprises a device object 260-280 for each attached control device 151-153, and at least one service object 230-250 for each defined service functionality. Each device object 260-280 further comprises at least one device function 261, 271, 281-282. The device function 261, 271, 281-282 is an object associated to a function of a control device 151-153. Furthermore, the apparatus 110 may comprise assignment mapping data 220 containing information of which device function 261, 271, 281-282 is assigned to which service object 230-250. The assignment mapping data 220 thus also contain information of which device object 260-280 corresponding control device 151-153 is attached to the service object 230-250. The apparatus 110 further comprises a controller 210 for maintaining the assignment mapping data 220 and for processing user requests. Maintenance of the assignment mapping data may be done according to assignment requests given by the user to the apparatus 110 through a user interface of the apparatus 100, for example. The controller 210 informs the service objects 230-250 of user given assign and revoke requests. Hence, the service object 230-250 becomes aware of its peer device functions 261, 271, 281-282.

When the user needs to communicate with the control system 200, user requests are delivered by the controller 210 to the desired service object 230-250, which in turn communicates with the corresponding peer device function 261, 271, 281-282. If required by the request or the service object 230-250, the device function 261, 271, 281-282 may communicate with the corresponding control device 151-153. Such communication may be utilized using a data connection 111-113. The data connection 111-113 may comprise for example Z-Wave.

The control system 200 reduces loss of control device data if a particular control device 151-153 needs to be replaced with another control device, for example in the case of a control device failure or replacement. Furthermore, the control system 200 enables migrating services from one location to another without a need to move the actual control device. Such situation may appear for example in a system where at least one control device 151-153 is installed permanently to a physical location, such as into a structure of a building.

More user services 230-250 can be created than there are control devices 151-153 in the system 200. Furthermore, a single control device 151-153 may be assigned to different services at different times with reduced loss of data.

In an embodiment, only one device function 261, 271, 281-282 may be assigned for a service object 230-250 simultaneously. The system 200 may comprise device functions 261, 271, 281-282 that are not assigned to any service object 230-250. Similarly, the system 200 may comprise service objects 230-250 that no device functions 261, 271, 281-282 are assigned to. However, the control data comprised by the service object 230-250 is maintained in the system 200 despite of current assignments.

In an embodiment, the control device 151-153 comprises an energy meter of a rental holiday home and the service provided for the user is energy metering of a tenant living in the rental holiday home. The energy consumption of the tenant during her or his stay can be measured by assigning the energy meter to the tenant at the beginning of the stay and revoking the energy meter at the end of the stay.

As can be seen in Fig. 2a, a device object 280 may communicate with a service object 250, a device object 270 may communicate with a service object 240 and a device object 260 may communicate with a service object 230, in an embodiment. A control device 151 may comprise a switch, a control device 152 may comprise a sensor and a control device 153 may comprise an energy meter, for example. The control devices 151-153 are attached to the apparatus 110 by user request. In response to the request, for example, the controller 210 informs service objects 230-250. Based on the received information the service objects 230-250 assign with corresponding device functions 261, 271, 282 and corresponding control devices 151-153. Thus the service objects 230-250 are attached to the corresponding control devices 151-153. Switching energy mode as active/inactive may be carried out with the service object 230 and a device function 161 of a device object 260 based on user requests and communicating corresponding control data to the control device 151 comprising the switch. Measuring temperature may be carried out with the service object 240 and a device function 271 of a device object 270. Metering energy consumption may be carried out with the service object 250 and the device function 282 based on user requests and communicating corresponding control data to the control device 153 comprising the energy meter. Energy metering data from the control device 153 may be communicated over the data connection 113 per request or automatically, for example periodically.

In an embodiment, the energy metering data may be stored to the system 200 using the service object 250. The temperature measuring data may be stored to the system 200 using the service object 240. The control device data of switch on/off data may be stored by the service object 230, correspondingly. Such control data may comprise for example number of switch operations, dates and times of switch operations and user identifications of requests for switch operations. The control device data of sensor data stored by the service object 240 may comprise for example temperatures, dates and times of temperature measurements, statistics of temperature measurements and user identifications of temperature measurement requests, for example. The control device data of energy meter data stored by the service object 250 may comprise for example amount of energy consumed, dates and times of energy consumption, statistics of energy consumption and user identifications of energy metering requests. Hence, the control device data stored by the service objects 230-250 may serve any control devices 151-153. For example, in case the control device 153 comprising switch and energy meter is replaced by another control device, the control device data stored for earlier control device 153 may be used for the latter control device as well, for providing service data to the service object 250.

In an embodiment, a control device 152 may comprise a temperature sensor. A user of an apparatus 110 may request temperature values from a controller 210, which informs a corresponding service object 240 about the request. The service object 240 communicates with a device function 271 of the device object 270 but may find stored temperature data by the service object 240 without a need to even access the temperature sensor 152. The sensor 152 may have stored temperature values periodically via the device object 270 to the service object 240. Furthermore, statistical analysis data relating to the temperature values may also be stored as the control device data by the service object 240. In case the temperature sensor 152 is replaced with a new one, the control device data of temperature values and statistical analysis can be used for the new control device for providing improved service data for the service object 240 and by that way also for the user function.

In an embodiment, a control device 151 may also be attached to a device object 260 without assigning a switch function 261 of the device object 260 to any service object 230-250. Control device data of the switch 151, such as previous service assignments or attached control device information, may have been stored by the service object 230. Such stored control device data of the switch 151 may be used for providing service data for any future service object 230-250 assigned for the currently revoked device function 261.

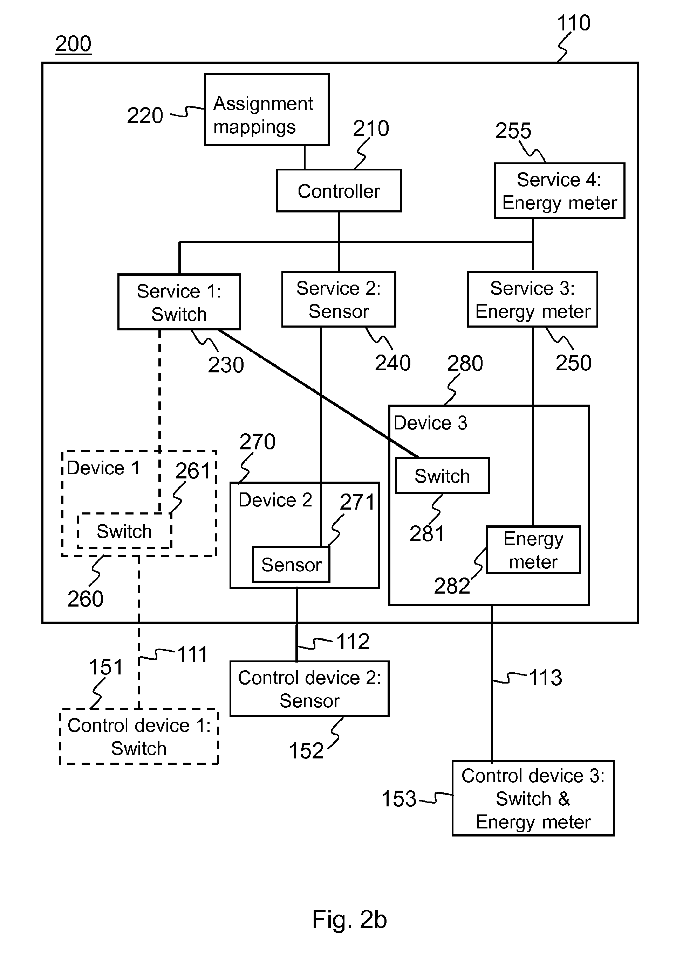

Fig. 2b presents an example block diagram of a control system 200 in which various embodiments of the invention may be applied. The block diagram shows an embodiment based on system of Fig. 2a, in which a device function is unassigned from a service object, and attachment between a control device and the service object is revoked. Furthermore, the association of the control device and the system is cancelled and eventually the control device is removed from the system. Furthermore, another control device with corresponding device function may be attached to the service object.

In an embodiment, the service object 230 stores control data relating to the control device 151 into the system. The device function (switch) 261 of the device object 260 may then be unassigned from the service object 230. Furthermore, the attachment between the control device 151 (switch) and the service object 230 is revoked and thus the control device (switch) 151 is removed from the system 200.

The control device 153 may comprise a switch and the device object 280 may comprise the device function 281 for a switch. The device function 281 may be assigned to the service object 230 that is earlier unassigned from the device function 260. Hence, the control device 153 is attached to the service object 230. Furthermore, the service object 230 may utilize the control data stored for the control device 151 also for the newly assigned service object 153.

Fig. 2b also illustrates a service object 255 that no device function 261, 271, 281-282 is assigned to. In an embodiment, the device function (energy meter) 282 of the device object 280 may be deassigned from the service object (energy meter) 250. After that, the device function 282 may be assigned to service object (energy meter) 255. Hence, the control device 153 is attached to the service object 255.

In an embodiment, at least one data connection 111-113 is based on Z-Wave technology. Z-Wave is a proprietary wireless communications protocol designed for home automation, specifically to remote control applications in residential and commercial environments. The technology uses a low-power radio embedded or retrofitted into electronic devices and systems, such as lightning, home access control, entertainment systems, and household appliances.

Z-Wave communicates using a low-power wireless technology designed specifically for remote control applications. The Z-Wave wireless protocol is optimized for reliable and low-latency communication of small data packets, unlike typical wireless local area network systems that are designed primarily for high-bandwidth data flow. Z-Wave operates in the sub-gigahertz frequency range, around 900MHz. This band competes with some cordless telephones and other consumer electronics devices, but avoids interference systems that operate on the crowded 2.4GHz band. Z-Wave is designed to be easily embedded in consumer electronics products, including battery operated devices such as remote controls, smoke alarms and security sensors, for example.

Z-Wave is a mesh networking technology, where each node or device 110, 151-153 on the network is capable of sending and receiving control commands through walls or floors and use intermediate nodes to route around household obstacles or radio dead spots that might occur in the home. Z-Wave devices, like control devices 151-153 can work individually or in groups, and can be programmed into scenes or events that trigger multiple control devices 151-153, either automatically or via remote control. By adding Z-Wave to control system 200, it is possible to control and monitor for example household functions via remote control, based on manual or automated decisions. The control can be applied to a single control device 151-153 or to a group of control devices 151-153, in a single room, zone or throughout the entire building. One benefit of Z-Wave over power line communication technologies is the ability to function in older houses lacking a neutral wire. Z-Wave control devices 151-153 can also be monitored and controlled from outside of the building by way of a gateway that combines Z-Wave with broadband Internet access, as showed in Fig. 1.

In an embodiment, Z-Wave enabled thermostat 153 is able to raise or lower an indoor temperature of a building automatically, based on commands or sensor data from Z-Wave enabled daylight sensor 112. Grouped scene controls can ensure that unnecessary energy consumption is minimized by various all-off states for systems throughout the building, such as lightning, appliances and home entertainment systems.

In an embodiment, Z-Wave based system 200 can transceive commands based on real time conditions, and is able to control devices 151-153 in intelligent groupings, hence allowing novel extensions of traditional home security concepts. As an example, the opening of a Z-Wave enabled door lock 151-153 can deactivate a security system, turn on lights 151-153 when children arrive home from school, and send a notification to a parent's computer or cell phone via the Internet. Opening a Z-Wave enabled garage door 151-153 can trigger exterior and interior home lights, while a Z-Wave motion detector 151-153 can trigger an outdoor security light 151-153 and a webcam 151-153, which would allow the end user to monitor the home while away.

In an embodiment, Z-Wave's ability to command multiple control devices 151-153 as a unified event makes a system 200 well suited for home audio and video applications. For example, a simple "Play DVD" command on the remote control 110 could turn on the needed components 151-153, set them to the correct inputs and even lower motorized shades and dim the room lights.

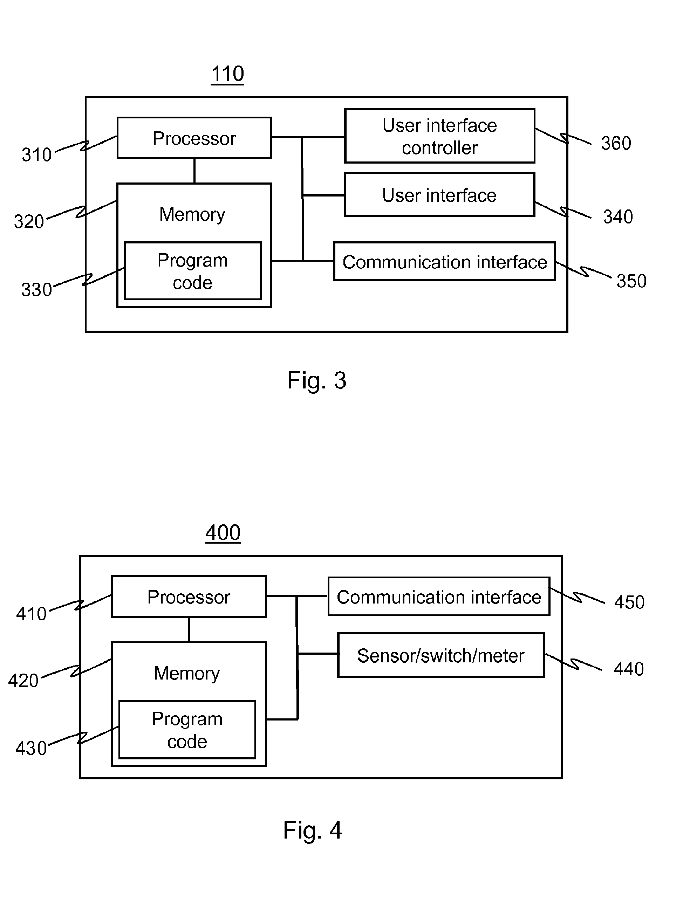

Fig. 3 presents an example block diagram of an apparatus 110 in which various embodiments of the invention may be applied. The apparatus 110 may be a laptop, a desktop, a tablet, a server computer or other computer apparatus.

The general structure of the apparatus 110 comprises a user interface 340, a communication interface 350, a processor 310, and a memory 320 coupled to the processor 310. The apparatus 110 further comprises software 330 stored in the memory 320 and operable to be loaded into and executed in the processor 310. The software 330 may comprise one or more software modules and can be in the form of a computer program product. A service object 230-250, a device function 261, 271, 281-282 and a device object 260-280 may be comprised in the software modules. The apparatus 110 may further comprise a user interface controller 360.

The processor 310 may be, e.g., a central processing unit (CPU), a microprocessor, a digital signal processor (DSP), a graphics processing unit, or the like. Fig. 3 shows one processor 310, but the apparatus 110 may comprise a plurality of processors. A controller 210 may be comprised by the processor 310. The memory 320 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The apparatus 110 may comprise a plurality of memories. The memory 320 may be constructed as a part of the apparatus 110 or it may be inserted into a slot, port, or the like of the user apparatus 110 by a user. The memory 320 may serve the sole purpose of storing data, or it may be constructed as a part of an apparatus serving other purposes, such as processing data. Assignment mapping data 220 and stored control device data of the control devices 151-153 may be stored to the memory 320.

The user interface controller 360 may comprise circuitry for receiving input from a user of the apparatus 110, e.g., via a keyboard, graphical user interface shown on the display of the user interfaces 340 of the apparatus 110, speech recognition circuitry, or an accessory device, such as a headset, and for providing output to the user via, e.g., a graphical user interface or a loudspeaker.

The communication interface module 350 implements at least part of data transmission. The communication interface module 350 may comprise, e.g., a wireless or a wired interface module. The wireless interface may comprise such as a WLAN, Z-Wave, Zigbee, Bluetooth™, Infrared (IR), Radio Frequency Identification (RF ID), GSM/GPRS, CDMA, WCDMA, or LTE (Long Term Evolution) radio module. The wired interface may comprise such as Universal Serial Bus (USB), Local Area Network (LAN) such as Ethernet or M-bus, for example. The communication interface module 350 may be integrated into the apparatus 110, or into an adapter, card or the like that may be inserted into a suitable slot or port of the apparatus 110. The communication interface module 350 may support one data interface technology or a plurality of technologies. The apparatus 110 may comprise a plurality of communication interface modules 350. Data communication between a device object and a control device may be transmitted using the communication interface 350. Furthermore, user communication data from a remote user terminal 120 may also be transmitted using the communication interface 350.

A skilled person appreciates that in addition to the elements shown in Fig. 3, the apparatus 110 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the apparatus 110 may comprise a disposable or rechargeable battery (not shown) for powering when external power if external power supply is not available.

Fig. 4 presents an example block diagram of a control device 400 in which various embodiments of the invention may be applied. The control device 400 may be a sensor, a switch or a meter, for example.

The general structure of the control device 400 comprises a processor 410, and a memory 420 coupled to the processor 410. The control device 400 further comprises software 430 stored in the memory 420 and operable to be loaded into and executed in the processor 410. The software 430 may comprise one or more software modules and can be in the form of a computer program product.

The processor 410 may be, e.g., a central processing unit (CPU), a microprocessor, a digital signal processor (DSP), a graphics processing unit, or the like. Fig. 4 shows one processor 410, but the control device 400 may comprise a plurality of processors.

The memory 420 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The control device 400 may comprise a plurality of memories. The memory 420 may be constructed as a part of the control device 400 or it may be inserted into a slot, port, or the like of the control device 400 by a user. The memory 420 may serve the sole purpose of storing data, or it may be constructed as a part of an apparatus serving other purposes, such as processing data.

The control device 400 may further comprise a sensor/switch/meter element 440 that may comprise a sensor, an energy meter, a temperature meter, a humidity meter, a switch, a motion detector, a door opening/closing detector, a window opening/closing detector, or an input/output device.

The communication interface module 450 implements at least part of data transmission. The communication interface module 450 may comprise, e.g., a wireless or a wired interface module. The wireless interface may comprise such as a WLAN, Z-Wave, Zigbee, Bluetooth™, Infrared (IR), Radio Frequency Identification (RF ID), GSM/GPRS, CDMA, WCDMA, or LTE (Long Term Evolution) radio module. The wired interface may comprise such as Universal Serial Bus (USB), Local Area Network (LAN) such as Ethernet or M-bus, for example. The communication interface module 450 may be integrated into the control device 400, or into an adapter, card or the like that may be inserted into a suitable slot or port of the control device 400. The communication interface module 450 may support one data interface technology or a plurality of technologies. The control device 400 may comprise a plurality of communication interface modules 450. Data communication between a device object and a control device may be transmitted using the communication interface 450.

A skilled person appreciates that in addition to the elements shown in Fig. 4, the control device 400 may comprise other elements, such as microphones, displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the control device 400 may comprise a disposable or rechargeable battery (not shown) for powering when external power if external power supply is not available

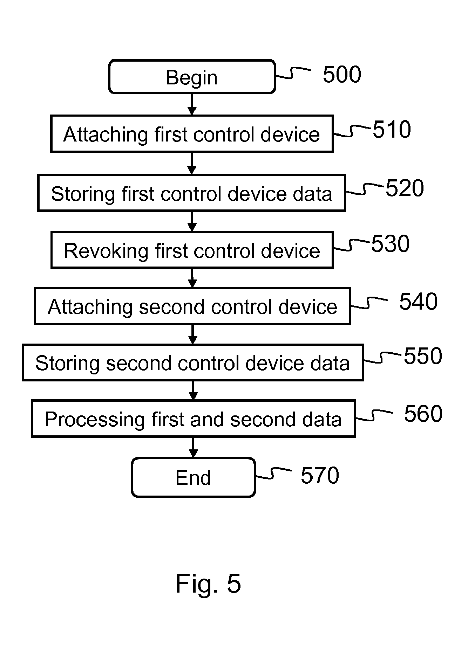

Fig. 5 shows a flow diagram showing operations in accordance with an example embodiment of the invention. In step 500, the method is started. In step 510, a first control device is attached to a service object of an apparatus using a first device object. In step 520, first control device data is stored to the service object. The first control device is revoked from the service object in step 530. A second control device is attached to the service object of the apparatus using a second device object in step 540. In step 550, second control device data is stored to the service object. In step 560, the first control device data and the second control device data are processed, by the service object, for providing control device functionality for a user. The method is ended in step 570.

Various embodiments have been presented. It should be appreciated that in this document, words comprise, include and contain are each used as open-ended expressions with no intended exclusivity. If desired, the different functions discussed herein may be performed in a different order and/or concurrently with each other. Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method for dynamically managing control devices in a control system, the method comprising:
attaching a first control device to a service object of an apparatus using a first device object;
storing first control device data to the service object;
revoking the first control device from the service object;
attaching a second control device to the service object of the apparatus using a second device object;
storing second control device data to the service object;
processing the first control device data and the second control device data, by the service object, for providing control device functionality for a user.

2. The method of claim 1, wherein the first device object comprises a first device function assigned to the service object.

3. The method of claim 1 or 2, wherein the second device object comprises a second device function assigned to the service object.

4. The method of any of claims 1 to 3, further comprising:
maintaining, by the apparatus, mapping information of attachment between the control device and the service object.

5. The method of claim 4, wherein the mapping information comprises assignment information of the device function and the service object.

6. The method of any of claims 4 to 5, further comprising:
receiving a request, by the apparatus, to attach the second control device;
informing the service object, by the apparatus, of the request; and
updating the mapping information of the attachment by the service object.

7. The method of any of claims 4 to 6, further comprising:
receiving a request, by the apparatus, to revoke the first control device;
informing the service object, by the apparatus, of the request; and
updating the mapping information of the revocation by the service object.

8. An apparatus for dynamically managing control devices in a control system, the apparatus comprising:
a communication interface for transceiving, over a data connection, control device data between the apparatus and the control devices;
at least one processor; and
at least one memory including computer program code;
the at least one memory and the computer program code configured to, with the at least one processor, cause the apparatus to:
attach a first control device to a service object of the apparatus using a first device object;
store first control device data to the service object;
revoke the first control device from the service object;
attach a second control device to the service object of the apparatus using a second device object;
store second control device data to the service object;
process the first control device data and the second control device data, by the service object, for providing control device functionality for a user.

9. The apparatus of claim 8, wherein the device object comprises at least one device function and provides control device data for as many service objects, respectively.

10. A computer program embodied on a computer readable medium comprising computer executable program code which, when executed by at least one processor of an apparatus, causes the apparatus to:
attach a first control device to a service object of the apparatus using a first device object;
store first control device data to the service object;
revoke the first control device from the service object;
attach a second control device to the service object of the apparatus using a second device object;
store second control device data to the service object;
process the first control device data and the second control device data, by the service object, for providing control device functionality for a user.
